(19) Europäisches Patentamt

European Patent Office

Office européen des brevets

(11) Veröffentlichungsnummer: **0 492 756 A2**

# (12) EUROPÄISCHE PATENTANMELDUNG

(21) Anmeldenummer: **91250329.9**

(22) Anmeldetag: **10.12.91**

(51) Int. Cl.⁵: **H04M 1/02**

(30) Priorität: **21.12.90 DE 4041987**

(43) Veröffentlichungstag der Anmeldung:
**01.07.92 Patentblatt 92/27**

(84) Benannte Vertragsstaaten:
**AT BE CH DE DK ES FR GB GR IT LI LU NL**

(71) Anmelder: **MANNESMANN Aktiengesellschaft**
**Mannesmannufer 2**
**W-4000 Düsseldorf 1(DE)**

(72) Erfinder: **Preker, Friedrich**
**Fährstrasse 218**
**W-4000 Düsseldorf(DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

(54) **Kommunikationsgerät, insbesondere Endgerät für den Telefonverkehr.**

(57) Das Kommunikationsgerät weist ein Gehäuse (1) für die Aufnahme verschiedener elektrischer bzw. elektronischer Schaltungskreise auf und auf einer Bedienerseite (2) ein Tastenfeld (3), in dem einer oder mehreren Tasten (6) festbestimmte Funktionen zugeordnet sind.

Um das Gerät sehr schmal zu bauen, wird vorgeschlagen, daß das Tastenfeld (3) aus zumindest zwei parallelverlaufenden Reihen (4,5) von Tasten (6) besteht, deren Tasten (6) mit geringstmöglichem, d.h. noch eine Betätigung durch Tastendruck zulassenden Abständen (8) angeordnet sind und daß alle Tasten (6) der einen Reihe (5) gegenüber allen Tasten (6) der anderen Reihe (4 bzw. 7) mit ihren oberen Tastenflächen (9) höher angeordnet sind, so daß jeweils benachbarte Tastenreihen (4,7) eine Stufe (11) bilden.

EP 0 492 756 A2

Die Erfindung betrifft ein Kommunikationsgerät, insbesondere ein Endgerät für den Telefonverkehr, mit einem Gehäuse für die Aufnahme elektrischer bzw. elektronischer Schaltungskreise, die für den Empfang, die akustische Wiedergabe , die akustische Aufnahme und/oder die Abstrahlung von Informationen vorgesehen sind, mit auf einer Bedienerseite angeordnetem Tastenfeld, in dem einer oder mehreren Tasten festbestimmte Funktionen zugeordnet sind.

Derartige Geräte werden als Telefonhörer des analogen und digitalen Systems eingesetzt. Hierbei ist das Gerät zugleich mit dem Tastenfeld ausgestattet. Da solche Tastenfelder nicht nur die normale Ziffernfolge voll Null bis Neun aufweisen, sondern mehr und mehr in Verbindung mit der Digitalisierung weitere Funktionstasten erhalten, ergibt sich eine erhebliche Ausdehnung des Tastenfeldes.

Es ist bekannt (VDI-Nachrichten Nr. 13 vom 30.3.1990, Aufsatz "Die Schlacht findet beim Material statt"), Tastenfelder mit Gruppen von 3 x 4- oder 3 x 3-Tasten anzuordnen, wobei die einzelnen Tasten einen Abstand voneinander einhalten, bei dem eine gleichzeitige Betätigung von zwei Tasten durch den Zeigefinger ausgeschlossen erscheint. Derartige Tastenfelder verbrauchen daher einen Platz, der das Gerät trotz aller Miniaturisierungs-Bemühungen nicht kleiner werden läßt. So bestimmen die immer mehr schrumpfenden Elektronik-Kreise im Geräte-Inneren nicht die äußeren Abmessungen des Gerätes. Da in der mobilen Funktechnik das Gerät jedoch tragbar sein muß und in Taschen, Kleidung und dgl. unterzubringen ist, sind nicht nur die elektronischen Schaltungen im Inneren zu miniaturisieren, sondern auch die äußeren Abmessungen.

Der Erfindung liegt daher die Aufgabe zugrunde, die Geräte-Abmessungen, insbesondere die Breite außen zu reduzieren.

Die gestellte Aufgabe wird erfindungsgemäß dadurch gelöst, daß das Tastenfeld aus zumindest zwei parallelverlaufenden Reihen von Tasten besteht, deren Tasten mit geringstmöglichem, d.h. noch eine Betätigung durch Tastendruck zulassenden Abständen angeordnet sind und daß alle Tasten der einen Reihe gegenüber allen Tasten der anderen Reihe mit ihren oberen Tastenflachen höher angeordnet sind, so daß jeweils benachbarte Tastenreihen eine Stufe bilden. Dadurch kann der funktionsmäßig bedingte seitliche Tastenabstand reduziert werden und damit die Breitenabmessung des Gerätes, das dadurch handlicher und leichter transportierbar wird. Außerdem ist vorteilhaft, daß durch den Höhenunterschied der Tasten keine Nachbartaste betätigt wird. Vorteilhaft ist die Betätigung auch ohne besondere Beleuchtung möglich, so daß das Gerät auch bei mangelhafter Beleuchtung (oder von Blinden) bedient werden kann, d.h.

die Tasten können durch ihre unmittelbare Nachbarschaft abgetastet und aufgefunden werden.

In Ausgestaltung der Erfindung ist vorgesehen, daß die Stufenhöhe zwischen zwei benachbarten Reihen von Tasten dem vorbestimmten Auslöseweg entspricht. Hier wird der Betätigungsdruck nicht weiter ausgeübt als über den Wirkpunkt hinaus, bevor dann die benachbarte Taste berührt werden kann. Somit ist eine Doppelbetätigung von Tasten weitestgehend ausgeschlossen.

In Ausgestaltung der Erfindung ist vorgesehen, daß bei drei parallelen Tastenreihen die mittlere Tastenreihe die höhere Stufe bildet. Eine solche bevorzugte Ausbildung gestattet das indivuelle Betätigen sowie das Ertasten einer Taste besonders leicht.

Die Anordnung einer großen Anzahl von Tasten kann nach der weiteren Erfindung derart erfolgen, daß die Tastenreihen parallel zur Längserstreckung des Gerätes verlaufen.

Dieses Stufenprinzip kann grundsätzlich dahingehend ausgenutzt werden, daß mehrere parallelverlaufende Tastenreihen eine Stufenanzahl (n-l) der Anzahl (n) der Tastenreihen bilden.

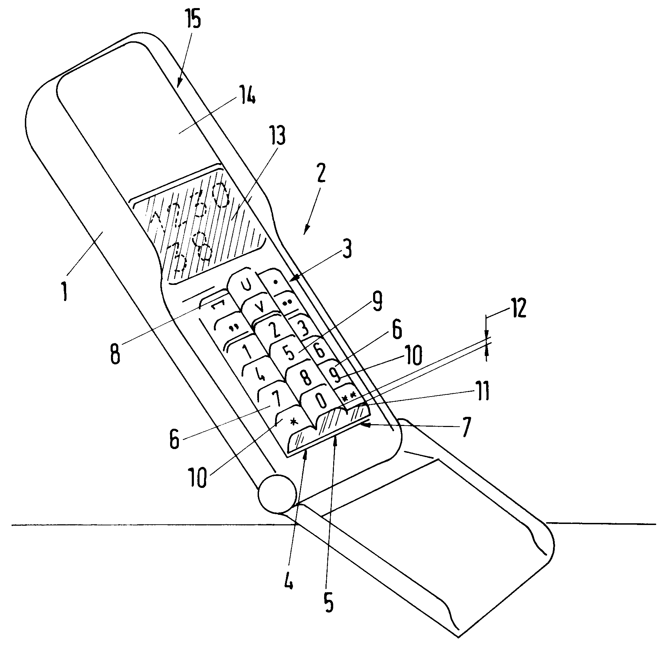

In der Zeichnung ist ein Ausführungsbeispiel schematisch dargestellt und wird nachfolgend erläutert.

Die einzige Figur zeigt das Endgerät in perspektivischer Darstellung.

Das Kommunikationsgerät kann aus jedem tragbaren datenverarbeitenden Gerät bestehen, wie dargestellt aus einem Endgerät für den Telefonverkehr.

Das Gerät besitzt ein Gehäuse 1, in dem (nicht sichtbare) elektrische bzw. elektronische Schaltungskreise, eine Energiequelle, Empfangstelle und Sendeteile und dgl. untergebracht sind. Auf der Bedienerseite 2 ist ein Tastenfeld 3 angeordnet. Jede der Tasten ist einer oder mehreren festbestimmten Funktionen zugeordnet, die selbstverständlich von dem festgespeicherten Software-Programm abhängig sind.

Das Tastenfeld 3 weist zumindest zwei parallelverlaufende Reihen 4 und 5 von Tasten 6 auf, wobei im Ausführungsbeispiel drei Tastenreihen 4, 5 und 7 vorhanden sind. Jede Taste 6 ist mit einem geringstmöglichen Abstand 8 (kaum sichtbar) zur Nachbartaste angeordnet, so daß eine reibungsfreie Betätigung beim Tastendrücken zugelassen ist. Alle Tasten 6 der einen Tastenreihe 5 sind gegenüber allen Tasten 6 der anderen Tastenreihen 4 bzw. 7 mit ihren oberen Tastenflächen 9 höher angeordnet, so daß zusammen mit den Tastenflächen 10 der niedrigen Tastenreihen 4 bzw. 7 eine Stufe 11 entsteht.

Die Stufenhöhe 12 zwischen zwei benachbarten Reihen 4 und 5 bzw. 5 und 7 beträgt so viel wie die Tastenfunktion an Auslöseweg voraussetzt oder ist sogar etwas geringer, so daß der Finger beim Betätigen einer Taste 6 eine benachbarte, tiefere Taste nicht erreichen kann.

Wie gezeichnet, bildet bei drei parallelen Tastenreihen 4, 5 und 7 die mittlere Reihe 5 die höhere Stufe 11.

Eine Erhöhung der Tastenzahl kann erreicht werden, indem die Tastenreihen 4, 5 und 7 parallel zur Längerstreckung des Gerätes verlaufen.

Bei den drei parallelverlaufenden Tastenreihen 4, 5 und 7 wird eine Stufenanzahl (n-l) der Gesamtzahl (n) der Tastenreihen 4, 5 und 7 gebildet.

Das Tastenfeld 3 reicht bis zu einem Display 13 für die Anzeige der eingetasteten Zeichen bzw. Funktionen. Das Display 13 wird durch ein Feld 14 für die akustischen Einrichtungen begrenzt. Das Gehäuse 1 bildet außerdem einen Schutzrand 15 gegen Lichteinfall.

**Patentansprüche**

1. Kommunikationsgerät, insbesondere Endgerät für den Telefonverkehr, mit einem Gehäuse für die Aufnahme elektrischer bzw. elektronischer Schaltungskreise, die für den Empfang, die akustische Wiedergabe, die akustische Aufnahme und/oder die Abstrahlung von Informationen vorgesehen sind, mit auf einer Bedienerseite angeordnetem Tastenfeld, in dem einer oder mehreren Tasten festbestimmte Funktionen zugeordnet sind,
   dadurch gekennzeichnet,
   daß das Tastenfeld (3) aus zumindest zwei parallelverlaufenden Reihen (4,5) von Tasten (6) besteht, deren Tasten (6) mit geringstmöglichem, d.h. noch eine Betätigung durch Tastendruck zulassenden Abständen (8) angeordnet sind und daß alle Tasten (6) der einen Reihe (5) gegenüber allen Tasten (6) der anderen Reihe (4 bzw. 7) mit ihren oberen Tastenflächen (9) höher angeordnet sind, so daß jeweils benachbarte Tastenreihen (4,7) eine Stufe (11) bilden.

2. Kommunikationsgerät nach Anspruch 1,
   dadurch gekennzeichnet,
   daß die Stufenhöhe (12) zwischen zwei benachbarten Reihen (4 und 5 bzw. 5 und 7) von Tasten (6) dem vorbestimmten Auslöseweg entspricht.

3. Kommunikationsgerät nach den Ansprüchen 1 und 2,
   dadurch gekennzeichnet,
   daß bei drei parallelen Tastenreihen (4,5,7) die mittlere Tastenreihe (5) die höhere Stufe (11) bildet.

4. Kommunikationsgerät nach einem oder mehreren der Ansprüche 1 bis 3,
   dadurch gekenzeichnet,
   daß die Tastenreihen (4,5,7) parallel zur Längserstreckung des Gerätes verlaufen.

5. Kommunikationsgerät nach einem oder mehreren der Ansprüche 1 bis 4,
   dadurch gekennzeichnet,
   daß mehrere parallelverlaufende Tastenreihen (4,5,7) eine Stufenanzahl (n-l) der Anzahl (n) der Tastenreihen (4,5,7) bilden.